# EUROPÄISCHE PATENTSCHRIFT

(11) **EP 1 025 111 B1**
(45) Veröffentlichungstag und Bekanntmachung des Hinweises auf die Patenterteilung: **21.11.2001**
(21) Anmeldenummer: 98952673.6
(22) Anmeldetag: 30.09.1998
(51) Int. Cl.: C07F 9/6568, C07F 15/00, C07C 45/50

(54) **VERFAHREN ZUR HERSTELLUNG VON PHOSPHABENZOLVERBINDUNGEN**
METHOD FOR PRODUCING PHOSPHABENZENE COMPOUNDS
PROCEDE DE PREPARATION DE COMPOSES PHOSPHABENZENE

(30) Priorität: 30.09.1997 DE 19743197
(43) Veröffentlichungstag der Anmeldung: 09.08.2000
(73) Patentinhaber: BASF AKTIENGESELLSCHAFT, 67056 Ludwigshafen (DE)
(72) Erfinder: PACIELLO, Rocco, D-67098 Bad Dürkheim (DE); ZELLER, Edgar, D-68163 Mannheim (DE); BREIT, Bernhard, D-35047 Marburg (DE); RÖPER, Michael, D-67157 Wachenheim (DE)
(74) Vertreter: Isenbruck, Günter, Dr.
(86) Internationale Anmeldenummer: EP9806216
(87) Internationale Veröffentlichungsnummer: WO9916774

(56) Entgegenhaltungen:
- WO-A-97/46507
- DE-A- 1 668 416

## Beschreibung

Phosphabenzolverbindungen können als Liganden in Übergangsmetallkomplexen eingesetzt werden, die bei der Hydroformylierung von Olefinen Verwendung finden. In der prioritätsälteren, nicht - vorveröffentlichten DE-A 196 21 967 und dem Titel "Verfahren zur Hydroformylierung und dafür geeignete Katalysatoren, die Phosphorverbindungen als Liganden enthalten" sind entsprechende Komplexe und Verfahren zu ihrer Herstellung beschrieben. Gemäß einer Verfahrensvariante kann Bis-3,3'(3-methyl-2,4,6-Triphenylphosphabenzol)-1,1'-diphenyl durch Umsetzung des entsprechenden Pyryliumsalzes mit Phosphorwasserstoff hergestellt werden, siehe die allgemeine Formel IV in DE-A-196 21 967.

In der DE-A-1 618 668 ist ein Verfahren zur Herstellung von substituierten Phosphabenzolen beschrieben, bei dem Pyryliumsalze mit Trishydroxymethylphosphin, Tetrahydroxymethylphosphinchlorid oder Tetrahydroxymethylphosphinhydroxid umgesetzt werden. Die Phosphinverbindungen sind schwierig darstellbar, und das Verfahren ist unwirtschaftlich.

DE-A 16 68 416 betrifft Phosphabenzole und Verfahren zu ihrer Herstellung. Die Phosphabenzole werden durch Umsetzung entsprechender substituierter Pyryliumsalze mit Phosphorwasserstoff hergestellt. Die Umsetzung erfolgt durch Reaktion mit Phosphoniumiodid oder durch Umsetzung mit einkondensiertem Phosphorwasserstoff.

In F. Lieb, "Synthesen und Reaktionen von Phosphorinen, Untersuchungen zur Darstellung von Systemen mit Arsen-Kohlenstoff-Doppelbindungen", Inaugural-Dissertation, Würzburg, 1969, Seiten 106 und 107 ist ein Verfahren zur Herstellung von 2,4,6-Triphenylphosphorin (2,4,6-Triphenylphosphabenzol) beschrieben, bei dem 2,4,6-Triphenylpyrylium-tetrafluoroborat in n-Butanol bei einer Temperatur von -78°C mit PH₃ versetzt wird, das sich im Verdünnungsmittel löst. Nach Verschließen des Reaktionsgefäßes wird für 41 Stunden bei einer Temperatur von 110°C unter Eigendruck umgesetzt.

Das Verfahren der Umsetzung unter Eigendruck hat den Nachteil, daß sich die Konzentration der Reaktanten ständig ändert und lange Umsetzungszeiten erforderlich sind. Das Einführen von PH₃ bei einer Temperatur von -78°C setzt den Einsatz entsprechender Kühlvorrichtungen voraus. Die Verfahrensführung im abgeschlossenen Reaktionsgefäß ist schwer oder nicht kontrollierbar.

Aufgabe der vorliegenden Erfindung ist die Bereitstellung eines Verfahrens zur Herstellung von Phosphabenzolverbindungen, das wirtschaftlich durchführbar ist und die Nachteile der bekannten Verfahren vermeidet.

Die Aufgabe wird erfindungsgemäß gelöst durch ein Verfahren zur Herstellung von Phosphabenzolverbindungen der allgemeinen Formeln I und II 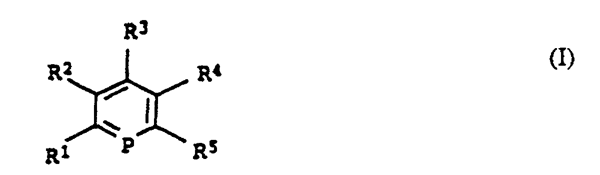 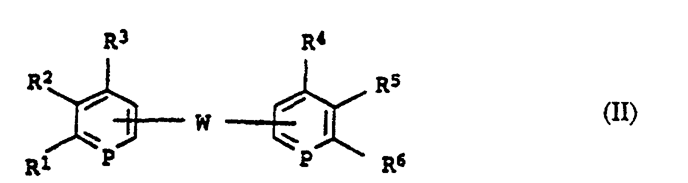
in denen R¹ bis R⁶ unabhängig voneinander für Wasserstoff, COOM, SO₃M, NR₃X, NR₂, OR, COOR oder SR mit M = Wasserstoff, NH₄ oder Alkalimetall, X = Anion, R = Wasserstoff oder C₁₋₆-Alkyl oder für C₁₋₁₂-Alkyl, C₆₋₁₂-Aryl, C₇₋₁₂-Aralkyl oder C₃₋₆-Heterocycloalkyl mit 1 bis 3 Heteroatomen stehen, die mit den vorstehenden Resten substituiert oder zu annellierten Ringen verbunden sein können,
   und
W eine Brücke aus einer kovalenten Bindung, einer Oxogruppe, einer Schwefelgruppe, einer Aminogruppe, einer Di-C₁₋₆-alkylsiliziumgruppe oder einem C₁₋₁₆-Rest bedeutet, der Bestandteil eines oder mehrerer verknüpfter cyclischer oder aromatischer Kerne sein kann und durch 1 bis 3 Heteroatome unterbrochen sein kann wobei die jeweils nicht an die Brücke gebundene o- oder m-Position der Phosphabenzolkerne einen der Reste R¹ bis R⁶ tragen kann,
mit Ausnahme von Bis-3,3' (3-methyl-2,4,6-triphenylphosphabenzol)-1,1' -diphenyl,
durch Umsetzung entsprechender Pyryliumsalze mit PH₃ in Gegenwart einer katalytischen Menge Säure und in Anwesenheit oder Abwesenheit eines Löse-oder Verdünnungsmittels. Das erfindungsgemäße Verfahren, ist dadurch gekennzeichnet, daß die Pyryliumsalze mit PH₃ bei einer Temperatur oberhalb von 0°C zusammengebracht und bei einer Temperatur von 0°C bis 200°C und einem Druck von oberhalb 1 bar umgesetzt werden.

Es wurde erfindungsgemäß gefunden, daß Phosphabenzolverbindungen der vorstehenden allgemeinen Formeln durch Umsetzung der entsprechenden Pyryliumsalze, d.h. Verbindungen, in denen in den allgemeinen Formeln I und II anstelle von Phosphor O⁺ mit entsprechendem Gegenion vorliegt, mit PH₃ erhältlich sind, wenn bestimmte Verfahrensbedingungen eingehalten werden. Die Pyryliumsalze sind dabei technisch erhältlich oder können einfach hergestellt werden. PH₃ ist technisch verfügbar.

Die Umsetzung erfolgt dabei vorzugsweise bei einem PH₃-Partialdruck im Bereich von 0,1 bis 100 bar, besonders bevorzugt von 5 bis 35 bar, insbesondere 20 bis 30 bar. Der Gesamtdruck im System hängt vom jeweiligen Lösungsmittel ab. Durch Aufpressen von PH₃ oder Inertgas kann der Gesamtdruck erhöht werden.

Vorzugsweise wird während der Umsetzung PH₃ in das Reaktionsgemisch eingeleitet, um den PH₃-Partialdruck im wesentlichen konstant zu halten. Diese Vorgehensweise erlaubt eine besonders wirtschaftliche und schnelle Umsetzung zu den gewünschten Phosphabenzolverbindungen. Dabei werden hohe Produktreinheiten und Umsätze erzielt. Das erfindungsgemäße Verfahren ist für eine Vielzahl von Produkten zuverlässig einsetzbar. Es kann kontinuierlich oder diskontinuierlich, vorzugsweise diskontinuierlich betrieben werden.

Bei einer besonders vorteilhaften Verfahrensvariante werden die Pyryliumsalze bei Umgebungstemperatur mit PH₃ zusammengebracht, und das so erhaltene Gemisch wird zur Umsetzung auf eine Temperatur im Bereich von 110 bis 130°C erhitzt.

Besonders bevorzugt beträgt die Temperatur bei der Umsetzung 115 bis 125°C. Die Umsetzung wird vorzugsweise in einem Autoklaven durchgeführt. Neben PH₃ kann zusätzlich ein Inertgas verwendet werden, mit dem der gewünschte Gesamtdruck eingestellt wird. Vorzugsweise wird jedoch nur PH₃ eingesetzt.

Die Umsetzung kann in Anwesenheit oder Abwesenheit eines Löse- oder Verdünnungsmittels durchgeführt werden. Vorzugsweise wird sie in Anwesenheit eines Löse- oder Verdünnungsmittels durchgeführt. Geeignete Löse- oder Verdünnungsmittel sind beispielsweise niederere aliphatische Alkohole, wie Methanol, Ethanol, n-Propanol, i-Propanol, n-Butanol, i-Butanol, tert.-Butanol oder Pentanol-Isomere, vorzugsweise Ethanol, Propanol oder Butanole, insbesondere n-Butanol.

Die Umsetzung wird vorzugsweise in Gegenwart eines Säurekatalysators durchgeführt. Geeignete Säurekatalysatoren sind Mineralsäuren, wie HI, HCl, HBr. Insbesondere wird Bromwasserstoff in Essigsäure oder Essigsäureanhydrid als Säurekatalysator eingesetzt.

Nach der Umsetzung wird das Reaktionsgemisch vorzugsweise entspannt und gegebenenfalls mit einem Inertgas gespült, wobei die aus dem Reaktionsgemisch austretenden Gase zur Abtrennung von nicht umgesetztem PH₃ in flüssiger Form gekühlt und durch einen Abscheider geführt werden, und das abgetrennte PH₃ in die Umsetzung zurückgeführt wird.

Besonders wirtschaftlich und ökologisch unbedenklich ist somit ein Verfahren, bei dem PH₃ in einen Reaktor eingeleitet wird, die Reaktion durchgeführt wird, und der Gasstrom über eine weitere Leitung durch einen Kühler beliebiger Bauart geleitet wird, in dem das PH₃ auskondensiert wird. In einem nachfolgenden Abscheider beliebiger Bauart wird das PH₃ sodann abgetrennt und beispielsweise mit Hilfe einer Pumpe in die Umsetzung zurückgeführt. Um ein besonders PH₃-armes Abgas zu erhalten, ist die Verwendung eines nachgeschalteten zweiten Kühlers und Abscheiders vorteilhaft. Um den Reaktorgasraum und die eingesetzten Apparaturen vollständig von PH₃ zu befreien, was wegen der Giftigkeit von PH₃ vorteilhaft ist, sollte eine Spülleitung für die Spülung mit einem Inertgas wie Stickstoff vorgesehen sein. Dabei sollte das Spülgas über die Kombination aus Kühler und Abscheider geleitet werden.

Die für die Umsetzung benötigte Zeit hängt von der Art des Pyryliumsalzes ab. Die Umsetzung wird je nach Pyryliumsalz vorzugsweise für einen Zeitraum von 1 bis 4 Stunden durchgeführt. Der Anteil an Lösungsmittel beträgt, bezogen auf die eingesetzten Pyryliumsalze, vorzugsweise 5 bis 50, besonders bevorzugt 15 bis 35 Gew.-%. Die Menge an eingesetztem Säurekatalysator beträgt, bezogen auf die Pyryliumsalze, vorzugsweise 0,01 bis 1%, besonders bevorzugt 0,03 bis 0,1%. Bei der Umsetzung mit einem Lösungsmittel hängt die Konzentration an PH₃ im Lösungsmittel vom PH₃-Partialdruck und der Art des Lösungsmittels ab; insbesondere bei kontinuierlicher Reaktionsführung sollte eine hohe Konzentration an PH₃ im Lösungsmittel beibehalten werden.

Zum Erreichen hoher Umsätze in kurzer Reaktionszeit wird vorzugsweise mit hohen PH₃-Drücken und kontinuierlichem Nachpressen von PH₃ gearbeitet.

Im erfindungsgemäßen Verfahren kann eine Vielzahl unterschiedlicher Pyryliumsalze eingesetzt werden. Das Verfahren ist allgemein nicht auf bestimmte Verbindungsklassen eingeschränkt. Beispielsweise können die Pyryliumsalze, Ferrate, Zinkate, Chloride, Borate, gegebenenfalls mit einem C₁₋₆-Alkylrest, Triflate, Trifluoracetate oder bevorzugt Tetrafluorborate, Perchlorate, Hydrogensulfate, Bromide, Iodide oder Gemische davon sein. Vorzugsweise werden Tetrafluorborate eingesetzt. Der organische Rest der erfindungsgemäß eingesetzten Pyryliumsalze wird nachstehend anhand der daraus hergestellten Phosphabenzolverbindungen näher beschrieben.

In den vorstehenden Verbindungen der allgemeinen Formel I sind die Reste R¹ bis R⁵ unabhängig voneinander Wasserstoff, COOM, SO₃M, NR₃X, NR₂, OR, COOR oder SR mit M == Wasserstoff, NH₄ oder Alkalimetall, X = Anion, R = Wasserstoff oder C₁₋₆-Alkyl, oder C₁₋₁₂-Alkyl, C₆₋₁₂-Aryl, C₇₋₁₂-Aralkyl, oder C₃₋₆-Heterocycloalkyl mit 1 bis 3 Heteroatomen, wobei die Alkyl-, Aryl- und Aralkylreste mit den davor genannten Resten substituiert oder zu annelierten Ringen verbunden sein können. Die Reste R¹ bis R⁵ können dabei gleich oder unterschiedlich sein. Vorzugsweise handelt es sich bei R¹ bis R⁵ um Alkyl, Aryl- oder Aralkylreste, die substituiert sein können.

Sind zwei oder mehrere der Reste zu annelierten Ringen verbunden, so kann es sich bei den Verbindungen um Phosphanaphthalin oder höhere aromatische Verbindungen handeln. Vorzugsweise handelt es sich bei den Resten um C₆₋ ₁₂-Arylreste, besonders bevorzugt Phenylreste, oder um C₇₋₁₂-Aralkylreste, besonders bevorzugt Benzylreste.

Besonders bevorzugt sind Verbindungen der allgemeinen Formel I, die in den ortho-Positionen und/oder para-Positionen durch gegebenenfalls substituierte Phenylreste substituiert sind. Insbesondere liegen in allen ortho- und para-Positionen Phenylreste vor. Diese Reste weisen vorzugsweise keinen oder einen weiteren Substituenten auf. Bei diesen Substituenten handelt es sich vorzugsweise um einen Säure- oder Aminrest, gegebenenfalls in Salzform, der insbesondere in der para-Position vorliegt. Zudem kann in einer oder beiden meta-Positionen ein Benzylrest vorliegen.

In den Verbindungen der allgemeinen Formel II haben R¹ bis R⁶ die vorstehend angegebene Bedeutung. -W- stellt eine Brücke aus einer kovalenten Bindung, einer Oxogruppe, einer Schwefelgruppe, einer Aminogruppe, einer Di-C₁₋₆-alkylsiliziumgruppe oder einem C₁₋₁₆-, vorzugsweise C₁₋₆-Rest dar, der Bestandteil eines oder mehrerer verknüpfter cyclischer oder aromatischer Kerne sein kann und durch 1 bis 3 Heteroatome unterbrochen sein kann, wobei die jeweils nicht an die Brücke gebundene o- oder m-Position der Phosphabenzolkerne einen der Reste R¹ bis R⁶ tragen kann.

Bei der Brücke W kann es sich beispielsweise um eine gegebenenfalls substituierte Methylengruppe der Formel CR⁷R⁸ handeln, in der R⁷ und R⁸ gleich oder unterschiedlich sein können und Wasserstoff oder Alkylreste mit insgesamt 1 bis 15 C-Atomen oder Phenylreste, wie auch Alkaryl- oder Aralkylreste sein können, sofern der Rest nicht mehr als 16 C-Atome aufweist.

Es kann sich bei -W- zudem um eine Oxagruppe (-O-), Schwefelgruppe (-S-), Di-C₁₋₆-alkylsiliziumgruppe (-Si(Alkyl)₂-) oder eine Aminogruppe -NR⁹-handeln, wobei R⁹ C₁₋₆-Alkyl, C₆₋₁₂-Aryl, C₇₋₁₅-Aralkyl, insbesondere Benzyl ist.

-W- kann einen oder mehrere verknüpfte cyclische oder auch aromatische Kerne aufweisen, besonders bevorzugt einen oder zwei cyclische oder aromatische Kerne. Beispielsweise kann W ein o-, m- oder p-Phenylenrest sein. Andere geeignete Reste sind Cycloalkyldiylreste, insbesondere Cyclopentyldiyl- und Cyclohexyldiyl-. Geeignete Aryldiylgruppen sind beispielsweise 1,1-Diphenyldiylreste, Naphthylediylreste, Diphenyletherdiylreste, Diphenylmethandiylreste, Diphenylethandiylreste, Diphenylpropandiylreste und Ferrocendiylreste. Beispiele geeigneter Phosphabenzolverbindungen sind in der bereits eingangs erwähnten DE-A 196 21 967 aufgeführt:

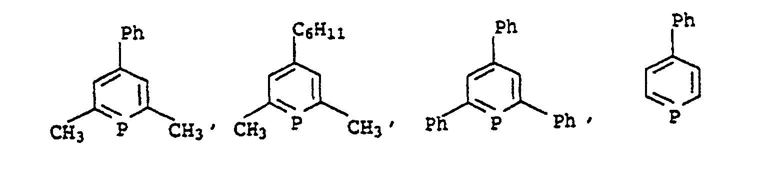

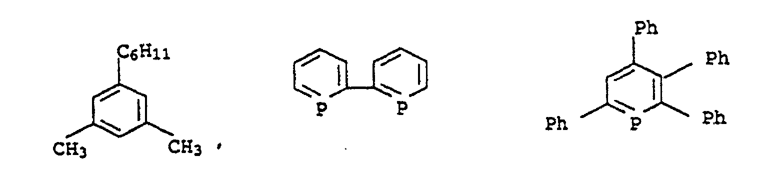

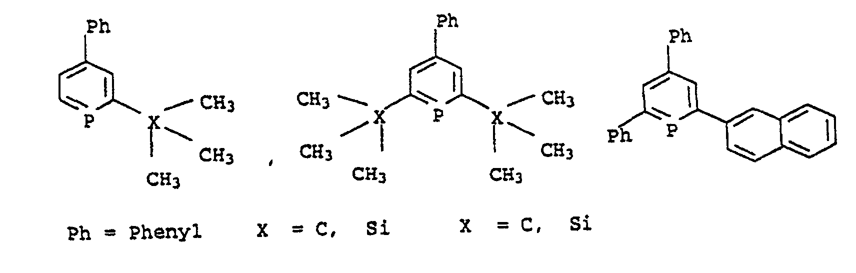

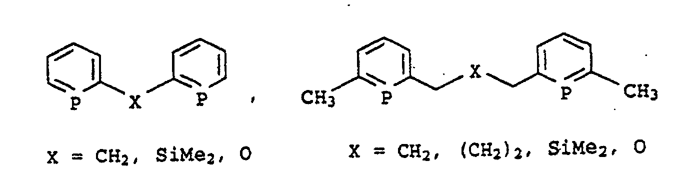

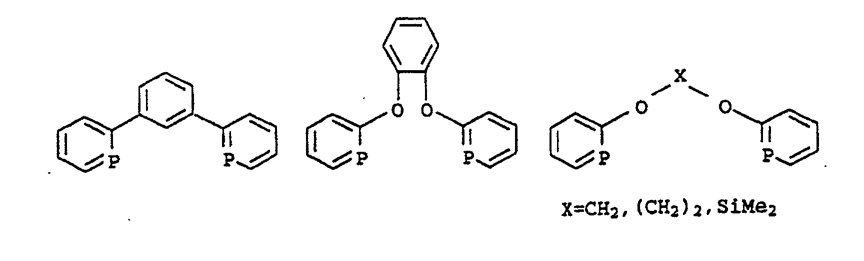

Die bei der direkten Umsetzung mit PH₃ eingesetzten Pyryliumsalze können beispielsweise nach Houben-Weyl, Hetarene II, Teil 2, Herausgeber R. Kreher, Band E7b, Seite 755 ff, Thieme Verlag, Stuttgart erhalten werden.

Die Erfindung betrifft auch einen Teil der vorstehend beschriebenen Phosphabenzolverbindungen: 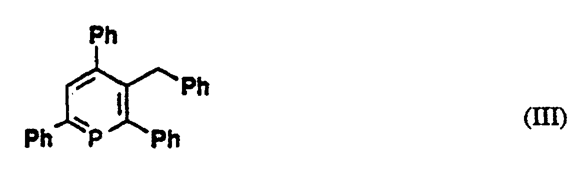 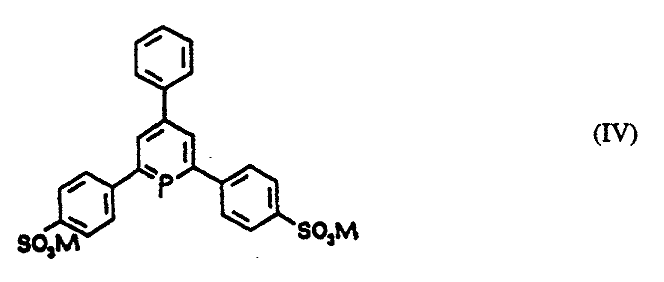 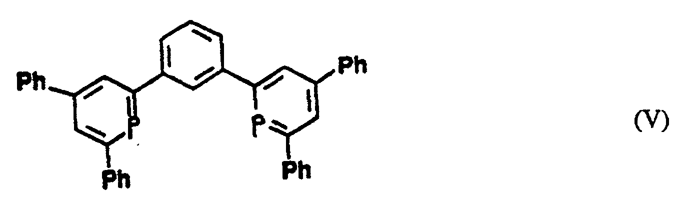 in denen Ph einen Phenylrest und M Wasserstoff oder eine Alkalimetall bedeuten.

Die erfindungsgemäß hergestellten Verbindungen sind zur Herstellung von Komplexen mit Metallen der VIII Nebengruppe des Periodensystems der Elemente verwendbar. Derartige Komplexe können als Cokatalysatoren bei Hydroformylierungen eingsetzt werden. Geeignete Umsetzungsbedingungen sind in der DE-A 196 21 967 beschrieben:

Die wirksamen Katalysatoren sind solche der Formel M(L)ₙ(CO)ₘ, in der M mindestens ein Zentralatom eines Elements der VIII. Nebengruppe des periodischen Systems der Elemente, L mindestens ein Ligand der Formeln I bis IV, n und m jeweils mindestens 1 ist und wobei n und m pro Äquivalent M z.B. jeweils die Zahlen 1 bis 3 und die Summe von n+m 2 bis 5 bedeuten und wobei noch weitere Reste wie Hydrido oder Alkyl- oder Acylreste als Liganden enthalten sein können.

Der aktive Carbonylkomplex wird dabei in der Regel in situ, d.h. im Hydroformylierungsreaktor, aus einem Salz oder einer Verbindung des Metalls M, dem Liganden und Kohlenmonoxid gebildet; er kann aber auch getrennt hergestellt und als solcher eingesetzt werden.

Die Komplexkatalysatoren bestehen bevorzugt aus einem Zentralatom M, ausgewählt aus den Übergangsmetallen Cobalt, Ruthenium, Rhodium, Palladium oder Platin, insbesondere aber Cobalt und Rhodium, komplexiert mit Carbonyl- sowie Hydrido-, Alkyl- oder Acylresten sowie als Liganden die erfindungsgemäß zu verwendenden ein- oder mehrzähnigen bevorzugten Phosphabenzole. Werden die Komplexkatalysatoren in situ erzeugt, setzt man einfache Precursorkomplexe wie Rhodiumbiscarbonylacetylacetonat oder Rhodiumacetat in Gegenwart der entsprechenden Liganden den Reaktionsbedingungen aus oder man versetzt Precursorkomplexe mit aktivierenden Zusätzen wie z.B. Brönsted- oder Lewissäuren sowie Lewisbasen.

Zur in situ Bildung des Katalysators im Reaktionsgemisch setzt man den Ligand im molaren Verhältnis (gerechnet als Äquivalent Phosphor) zu Rhodium von 1 : 1 bis 1000 : 1 ein und verwendet zusätzlich ein inertes Lösungsmittel. Besonders bevorzugte Lösungsmittel sind die Aldehyde, die durch Umsetzung des jeweiligen Olefins entstehen, sowie die syntheseeigenen Hochsieder, die durch Folgereaktionen des jeweiligen Aldehyds im Hydroformylierungsverfahren entstehen. Bei durch geeignete Substituenten hydrophylisierten Liganden werden bevorzugt Wasser, Alkohole oder andere polare Lösungsmittel eingesetzt.

Die Zusammensetzung des im erfindungsgemäßen Hydroformylierungsverfahren eingesetzten Synthesegases CO/H₂ kann in weiten Bereichen variiert werden. Beispielsweise kann Synthesegas mit CO/H₂-Molverhältnissen von 5 : 95 bis 70 : 30 erfolgreich eingesetzt werden, bevorzugt wird Synthesegas mit CO/H₂-Verhältnissen von 40 : 60 bis 60 : 40, besonders bevorzugt wird ein CO/H₂ Verhältnis von etwa 1 : 1 angewandt.

Die Hydroformylierungsreaktion mit dem Katalysator wird vorzugsweise bei einer Temperatur zwischen 20 und 180°C, insbesondere 50 bis 150°C, durchgeführt. Für jedes Katalysatorsystem wird jedoch zwecksmäßig eine optimale Temperatur experimentell ermittelt. Der Reaktionsdruck kann je nach Cokatalysator, d.h. Ligand, und Substrat in einem Bereich von Normaldruck, d.h. Atmosphärendruck, bis 700 bar, vorzugsweise bis 300 bar, schwanken, wobei man normalerweise Reaktionen in einem Bereich bis zu etwa 30 bar als Niederdruck-, in einem Bereich bis zu etwa 100 bar als Mitteldruck- und über 100 bar als Hochdruckreaktionen bezeichnet.

Dabei arbeitet man in der Regel mit dem homogen im Reaktionsmedium gelösten Katalysator, der vom Austrag der Hydroformylierungsreaktion abgetrennt und in die Hydroformylierungsstufe zurückgeführt wird.

Man erhält in der Regel nahezu ausschließlich die entsprechenden Aldehyde in ausgezeichneten Ausbeuten.

Als erfindungsgemäß zu hydroformylierende Olefine kommen α-Olefine oder interne Olefine oder interne, verzweigte Olefine in Betracht. Beispielsweise seien folgende Olefine genannt: Ethylen, Propen, 1-Buten, 1-Octen, C₅₋₂₀ α-Olefine lineare C₅₋₂₀ interne-Olefine, Buten-2; verzweigte, interne Octen-Gemische; verzweigte, interne None-Gemische; verzweigte, interne Dodecen-Gemische, Cyclohexen, α-Pinen, Styrol, 4-Isobutylstyrol, 3-Pentensäuremethylester, 4-Pentensäuremethylester, Ölsäure-methylester, 3-Pentennitril, 4-Pentennitril, 2,7-Octadienol-1, 7-Octenal, Acrylsäuremethylester, Methacrylsäuremethylester, Acrylnitril, Vinylacetat, Vinylglycoldiacetat, Vinylmethylether, Polypropen, Polyisobutylen. Ebenfalls geeignete Substrate sind Di- oder Polyene mit isolierten oder konjugierten Doppelbindungen. Beispiele sind 1,3-Butadien, 1,5-Hexadien, Vinylcyclohexen, Dicyclopentadien, 1,5,9-Cyclooctatrien, Butadienhomo- und Copolymere, Polyisobuten.

Darüber hinaus wird die Hydroformylierungsreaktion in an sich bekannter Weise durchgeführt. Einzelheiten der Verfahrensführung sind Beller, et al,. Journal of Molecular Catalysis A: 104 (1995) 17 - 85 und Falbe, Ed. New Syntheses with Carbon Monoxide, Springer, Berlin 1980, S.55ff., zu entnehmen.

Die Erfindung wird nachstehend anhand von Beispielen näher erläutert:

### Beispiele 1 bis 6

### 2,4,6-Triphenylphosphabenzol

2,4,6-Triphenylphosphabenol wurde aus kommerziell verfügbarem 2,4,6-Triphenylpyryliumtetrafluoroboratsalz (Aldrich) mit Hilfe von PH₃ hergestellt. Das Salz wurde in einer Menge von 4 mmol beziehungsweise 63 mmol eingesetzt. Alle Versuche wurden in einem 300 ml fassenden Autoklaven (Material HC) durchgeführt. Der Autoklav wurde mit 100 g beziehungsweise 150 g n-Butanol als Lösungsmittel und 0,5 g beziehungsweise 1,0 g Bromwasserstoff in Essigsäure (30 Gew.-%, Aldrich) als Katalysator gefüllt und mit 5 bar Stickstoff abgepresst. Der Gasraum wurde anschließend einmal mit PH₃ gespült. Es wurden sodann 5 bar PH₃ bei Raumtemperatur aufgepresst und mit PH₃ nachgepresst bis der Druck bei 5 bar konstant blieb. Das Reaktionsgemisch wurde sodann auf eine Reaktionstemperatur von 110°C erhitzt und die Lösung mit einem Begasungsrührer kräftig gerührt. Ein Eigendruck von 12 bar stellte sich ein. Sodann wurde bei einem Druck von 12 bar umgesetzt, wobei während der Umsetzung der Druck im Reaktor durch Nachpressen über einen Druckregler auf dem gewünschten Druckniveau gehalten wurde. Bei anderen Umsetzungen wurde durch Aufpressen PH₃ bei einer anderen Druckstufe gearbeitet. Nach der Reaktionszeit wurde der Autoklav abgekühlt, entspannt, mit Stickstoff unter Rühren gründlich ausgegast und ausgebaut. Die Autoklavenausträge wurden auf die Hälfte eingeengt und über Nacht im Kühlschrank auskristallisiert. Die Kristalle wurden abgesaugt, dreimal mit Pentan gewaschen und getrocknet. Die Kristalle sowie die Mutterlaugen wurden ausgewogen und jeweils der Phosphabenzol-Anteil mittels Gasgromatographie mit internem Standard und Korrekturfaktoren bestimmt. Die Ergebnisse sind in der nachstehenden Tabelle wiedergegeben.

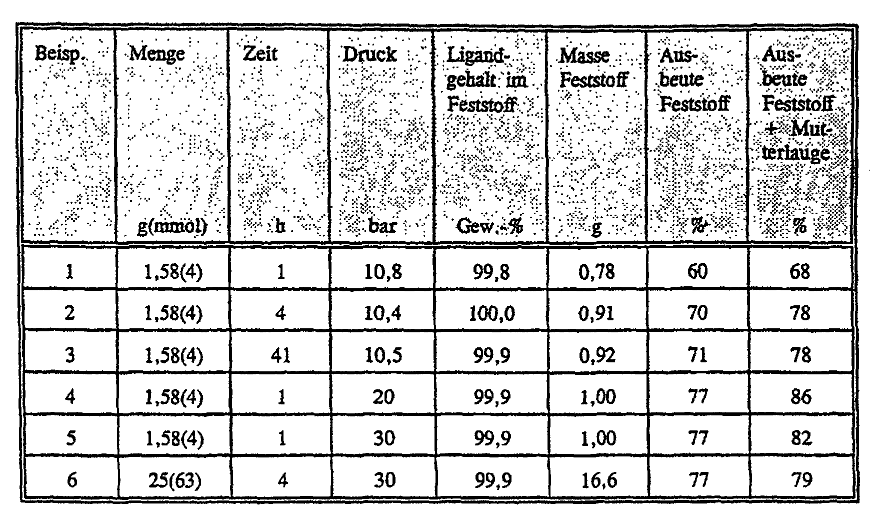

Aus den Ergebnissen geht hervor, daß die Umsetzung in wirtschaftlicher Weise schnell durchgeführt werden kann. Bei kürzeren Umsetzungszeiten wird vorzugsweise mit erhöhtem PH3-Druck gearbeitet.

### Beispiel 7

### Pyryliumsalz zur Herstellung von 2,4,6-Triphenyl-3-benzylphosphabenzol

Die Synthese des 2,4,6-Triphenyl-3-benzylpyryliumtetrafluoroboratsalzes auf Basis von 1,3-Diphenyl-3-oxo-propen (Chalkon) wurde, wie in Houben-Weyl, Band E7b, Seite 855 für das 2,4,6-Triphenypyryliumtetrafluoroboratsalz beschrieben, ohne Zusatz von Acetophenon durchgeführt.

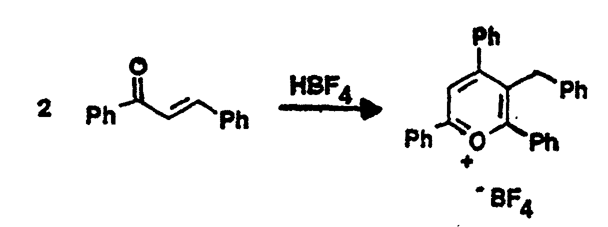

### Beispiel 8

### Pyryliumsalz zur Herstellung von 1,3-Bis(2,2'-4,6-diphenylphosphabenzol)benzol

Die Synthese des 1,3-Bis(2,2'-4,6-diphenylpyryliumtetrafluoroborat)benzols wurde wie folgt durchgeführt:

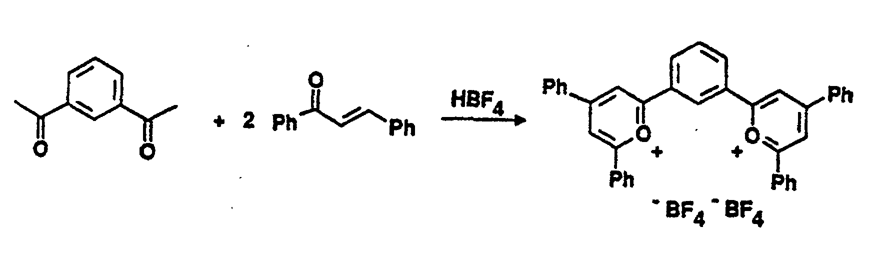

1,3-Diacetylbenzol (1,00 g 6,17 mmol) und Chalkon (5,10 g, 24,7 mmol) wurden in 10 ml 1,2-Dichlorethan gelöst und auf 70°C erwärmt. Tetrafluorborsäure-Diethyletherat (4,02 g, 24,7 mmol) wurde zugegeben und die Lösung 2 h unter Rückfluß erhitzt. Die auf Raumtemperatur abgekühlte Reaktionsmischung wurde abfiltriert und das Filtrat mit 20 ml Diethylether versetzt. Der ausgefallene Feststoff wurde in wenig Methylenchlorid aufgenommen und mit Ethanol ausgefällt. Die vereinigten Feststoffe wurden aus Ethanol umkristallisiert. Ausbeute: 35 bis 40%.

### Beispiel 9

### Pyryliumsalz zur Herstellung von 2,6-(4-Sulfonatophenyl)-4-phenylphosphabenzol

Die Synthese des 2,6-(4-Sulfonatophenyl)-4-phenylpyryliumtetrafluoroboratsalzes wurde in zwei Stufen wie folgt durchgeführt:

### Stufe 1: Synthese von 3-(4-Sulfonatophenyl)-3-oxo-1-phenylpropen

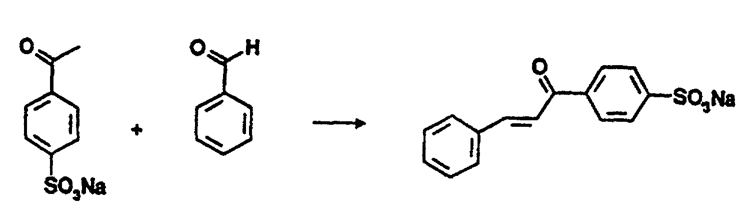

4-Acetoxybenzolsulfonsäure-Natriumsalz (22,2 g, 0,1 mol) wurde in 100 ml Wasser gelöst und auf 50°C erhitzt. Eine Lösung von 0,2 g NaOH in 100 ml Methanol und Benzaldehyd (10,6 g, 0,1 mol) wurden zugegeben. Ein Feststoff fiel aus und wurde nach 3 h Rühren bei Raumtemperatur abgesaugt. Der Feststoff wurde 3 mal mit Diethylether gewaschen. Ausbeute: 77%.

### Stufe 2: Synthese von 2,6-(4-Sulfonatophenyl)-4-phenylpyryliumtetrafluoroborat

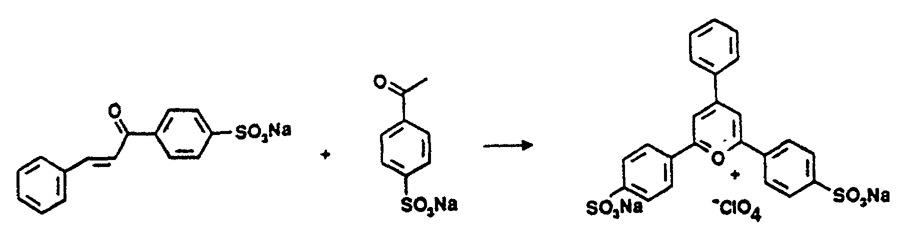

3-(4-Sulfonatophenyl)-3-oxo-1-phenylpropen (3,1 g, 0,01 mol) und Acetoxybenzolsulfonsäure-Natriumsalz (2,22 g, 0,01 mol) wurden gemischt und mit 2 ml Wasser versetzt. Perchlorsäure (10 ml) wurde anschließend zugetropft. Es bildete sich eine intensiv gelbe Suspension. Die Suspension wurde auf 90°C erhitzt und 2 h gerührt, wobei sich eine homogene Lösung bildete. Nach Abkühlen auf Raumtemperautr fiel ein Teil des Produktes als Feststoff aus und wurde durch Filtration abgetrennt, 3 mal mit gekühltem 1-Butanol gewaschen und bei 80°C und 6 mbar getrocknet. Die überstehende Lösung wurde in gekühltes 1-Butanol getropft, wobei weiteres Produkt ausfiel, welches abfiltriert wurde und wie die erste Fraktion aufbereitet wurde. Ausbeute: 3,1 g gelbgrüner, wasserlöslicher Feststoff.

### Beispiele 10 bis 14

### PH₃-Umsetzungen

Alle Versuche (diskontinuierlich) wurden in einem 300 ml Autoklaven (Material HC) durchgeführt. Der Autoklav wurde befüllt (Lösungsmittel:n-Butanol, 100g; Katalysator: Bromwasserstoff in Essigsäure (30 Gew.-%, Aldrich), 0,5 g) und mit 5 bar N₂ abgepresst. Der Gasraum wurde anschließend einmal mit PH₃ gespült. Es wurden 5 bar PH₃ bei Raumtemperatur aufgepresst und mit PH₃ nachgepresst, bis der Druck bei 5 bar konstant blieb. Das Reaktionsgemisch wurde auf die Reaktionstemperatur erhitzt und die Lösung mit einem Begasungsrührer kräftig gerührt. Ein Eigendruck von 10,5 bar stellte sich ein. Es wurde anschließend bei diesem Druck oder wahlweise durch Aufpressen mit PH₃ bei höherem Druck gearbeitet. Während der Reaktion wurde der Druck im Reaktor durch Nachpressen über einen Druckregler auf dem erwünschten Druckniveau gehalten. Nach der Reaktionszeit wurde der Autoklav abgekühlt, entspannt, mit N₂ unter Rühren gründlich ausgegast und ausgebaut.

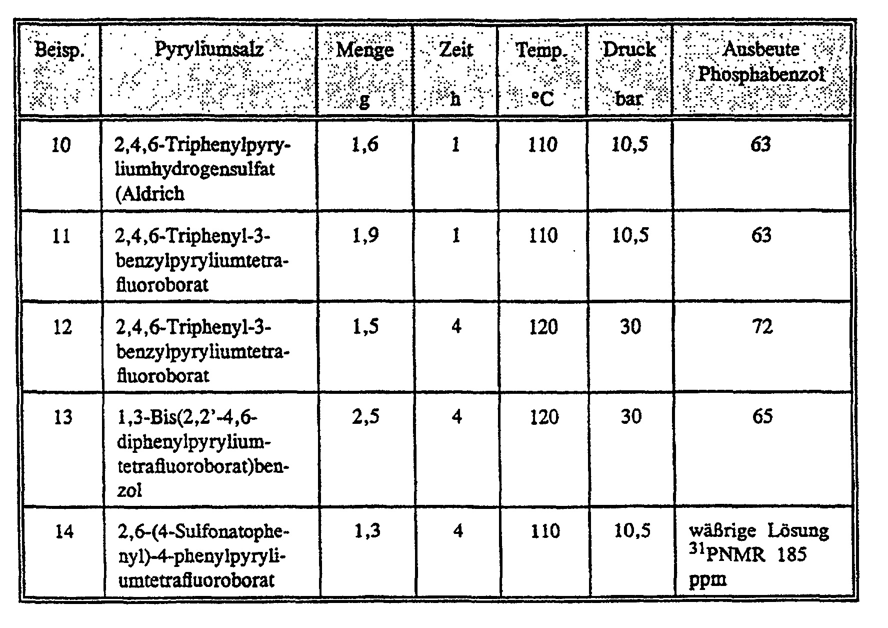

## Patentansprüche

1. Verfahren zur Herstellung von Phosphabenzolverbindungen der allgemeinen Formeln I und II 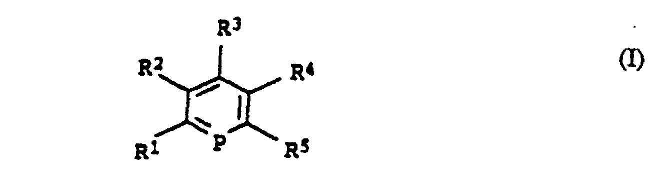 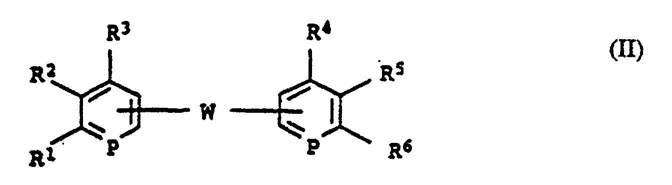
in denen R¹ bis R⁶ unabhängig voneinander für Wasserstoff, COOM, SO₃M, NR₃X, NR₂, OR, COOR oder SR mit M = Wasserstoff, NH₄ oder Alkalimetall, X = Anion, R = Wasserstoff oder C₁₋₆-Alkyl, oder für C₁₋₁₂-Alkyl, C₆₋₁₂-Aryl, C₇₋₁₂-Aralkyl oder C₃₋₆-Heterocycloalkyl mit 1 bis 3 Heteroatomen stehen, die mit den vorstehenden Resten substituiert oder zu annelierten Ringen verbunden sein können,
und
-W- eine Brücke aus einer kovalenten Bindung, einer Oxogruppe einer Schwefelgruppe, einer Aminogruppe, einer Di-C₁₋₆-alkylsiliziumgruppe, oder einem C₁₋₁₆-Rest bedeutet, der Bestandteil eines oder mehrerer verknüpfter cyclischer oder aromatischer Kerne sein kann und durch 1 bis 3 Heteroatome unterbrochen sein kann wobei die jeweils nicht an die Brücke gebundene o- oder m-Position der Phosghabenzolkerne einen der Reste R¹ bis R⁶ tragen kann,
mit Ausnahme von Bis -3,3'(3-methyl(2,4,6-triphenylphosphabenzol)-1,1' -diphenyl,
durch Umsetzung entsprechender Pyryliumsalze mit PH₃ in Gegenwart einer katalytischen Menge Säure und in Anwesenheit oder Abwesenheit eines Löse- oder Verdünnungsmittels, **dadurch gekennzeichnet, daß** die Pyryliumsalze mit PH₃ bei einer Temperatur oberhalb von 0°C zusammengebracht und bei einer Temperatur oberhalb von 0°C bis 200°C und einem Druck oberhalb von 1 bar umgesetzt werden.

2. Verfahren nach Anspruch 1, **dadurch gekennzeichnet, daß** die Umsetzung bei einem PH₃-Partialdruck im Bereich von 0,1 bis 100 bar erfolgt.

3. Verfahren nach Anspruch 1 oder 2, **dadurch gekennzeichnet, daß** die Umsetzung bei einem Druck von 5 bis 35 bar erfolgt.

4. Verfahren nach einem der Ansprüche 1 bis 3, **dadurch gekennzeichnet, daß** während der Umsetzung PH₃ in das Reaktionsgemisch eingeleitet wird, um den PH₃-Partialdruck im wesentlichen konstant zu halten.

5. Verfahren nach einem der Ansprüche 1 bis 4, **dadurch gekennzeichnet, daß** die Pyryliumsalze bei Umgebungstemperatur mit PH₃ zusammengebracht werden, und das so erhaltene Gemisch zur Umsetzung auf eine Temperatur im Bereich von 110 bis 130°C erhitzt wird.

6. Verfahren nach einem der Ansprüche 1 bis 5, **dadurch gekennzeichnet, daß** die Verbindungen der allgemeinen Formeln I und II als Reste R¹ bis R⁶ Phenylreste oder Benzylreste aufweisen, die durch SO₃M substituiert sein können.

7. Verfahren nach einem der Ansprüche 1 bis 6, **dadurch gekennzeichnet, daß** die Pyryliumsalze Tetrafluorborate, Perchlorate, Hydrogensulfate, Bromide, Iodide oder Gemische davon sind.

8. Verfahren nach einem der Ansprüche 1 bis 7, **dadurch gekennzeichnet, daß** nach der Umsetzung das Reaktionsgemisch entspannt und gegebenenfalls mit einem Inertgas gespült wird, wobei die aus dem Reaktionsgemisch ausgetretenen Gase zur Abtrennung von nicht umgesetztem PH₃ in flüssiger Form gekühlt und durch einen Abscheider geführt werden, und das abgetrennte PH₃ in die Umsetzung zurückgeführt wird.

9. Verbindungen der Formeln III, IV und V 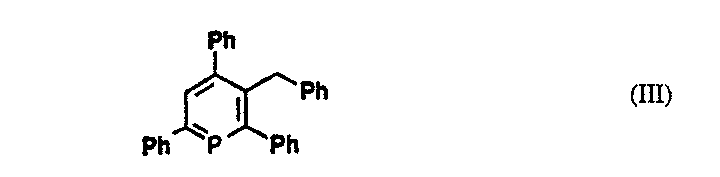 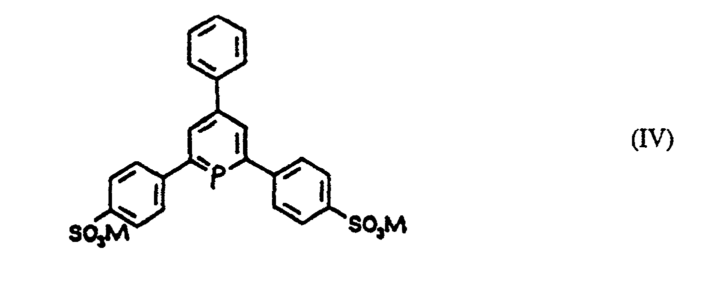 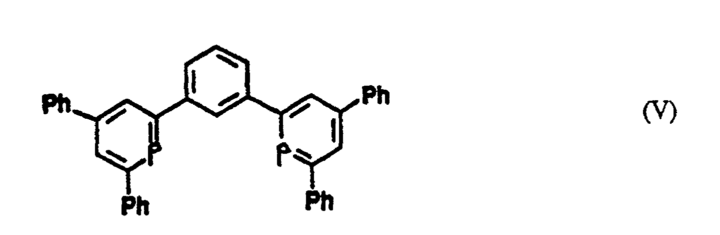 in denen Ph einen Phenylrest und M Wasserstoff oder ein Alkalimetall bedeuten.

10. Verwendung der Verbindungen gemäß Anspruch 9 zur Herstellung von Komplexen mit Metallen der VIII. Nebengruppe des Periodensystems der Elemente.

## Claims

1. A process for the preparation of phosphabenzene compounds of the formulae I and II 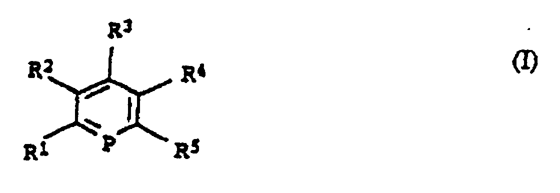 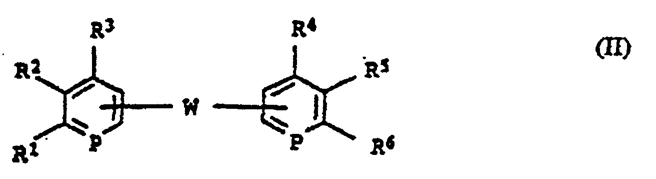
where R¹ to R⁶, independently of one another, are hydrogen, COOM, SO₃M, NR₃X, NR₂, OR, COOR or SR, where M is hydrogen, NH₄ or an alkali metal, X is an anion, R is hydrogen, C₁₋₆-alkyl, or C₁₋₁₂-alkyl, C₆₋₁₂-aryl, C₇₋₁₂-aralkyl or C₃₋₆-heterocycloalkyl having 1 to 3 heteroatoms which may be substituted by the above radicals or linked to form fused rings, and
-W- is a bridge comprising a covalent bond, an oxo group, a sulfur group, an amino group, a di-C₁₋₆-alkylsilicon group or a C₁₋₁₆-radial, which may be part of one or more linked cyclic or aromatic rings and may be interrupted by 1 to 3 heteroatoms, where the phosphabenzene ring o- or m-position not bonded to the bridge may carry one of the radicals R¹ to R⁶,
with the exception of 3,3'-bis(3-methyl-2,4,6-triphenyl-phosphabenzene)-1,1'-biphenyl,
by reacting corresponding pyrylium salts with PH₃ in the presence of a catalytic amount of acid and in the presence or absence of a solvent or diluent wherein the pyrylium salts are mixed with PH₃ at above 0°C and reacted at from 0°C to 200°C and at a pressure greater than 1 bar.

2. A process as claimed in claim 1, wherein the reaction is carried out at a PH₃ partial pressure in the range from 0.1 to 100 bar.

3. A process as claimed in claim 1 or 2, wherein the reaction is carried out at a pressure of from 5 to 35 bar.

4. A process as claimed in any one of claims 1 to 3, wherein PH₃ is passed into the reaction mixture during the reaction in order to keep the PH₃ partial pressure essentially constant.

5. A process as claimed in any one of claims 1 to 4, wherein the pyrylium salts are mixed with PH₃ at ambient temperature, and the resultant mixture is heated to a temperature in the range from 110 to 130°C for the reaction.

6. A process as claimed in any one of claims 1 to 5, wherein the radicals R¹ to R⁶ in the compounds of the formulae I and II are phenyl radicals or benzyl radicals, which may be substituted by SO₃M.

7. A process as claimed in any one of claims 1 to 6, wherein the pyrylium salts are tetrafluoroborates, perchlorates, hydrogensulfates, bromides, iodides or mixtures thereof.

8. A process as claimed in any one of claims 1 to 7, wherein, after the reaction, the reaction mixture is decompressed and, if desired, flushed with an inert gas, the gases leaving the reaction mixture being cooled and passed through a separator in order to removed unreacted PH₃ in liquid form, and the PH₃ removed is fed back into the reaction.

9. A compound of the formula III, IV or V 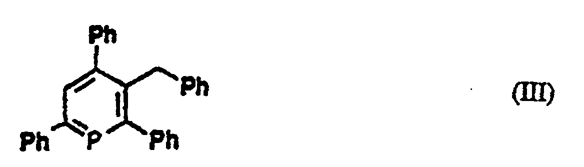 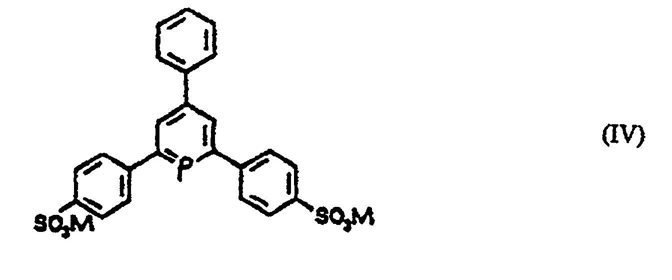 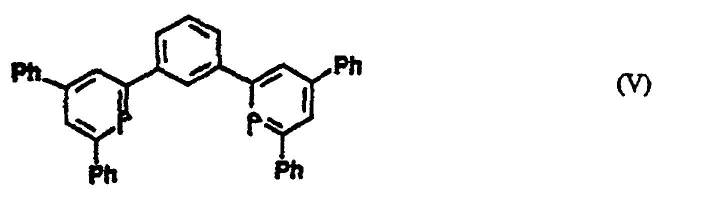 where Ph is a phenyl radical, and M is hydrogen or an alkali metal.

10. The use of a compound as claimed in claim 9 for the preparation of complexes with metals from subgroup VIII of the Periodic Table of the Elements.

## Revendications

1. Procédé de préparation de composés de phosphabenzène répondant aux formules générales I et II : 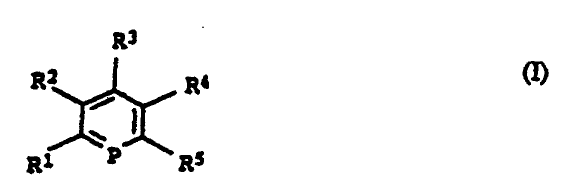 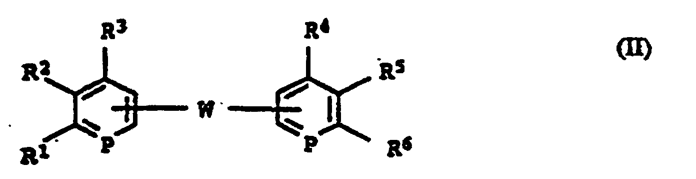
dans lesquelles R¹ à R⁶ représentent, indépendamment l'un de l'autre, de l'hydrogène, COOM, SO₃M, NR₃X,NR₂, OR, COOR ou SR où M = hydrogène, NH₄ ou métal alcalin, X = anion, R = hydrogène ou alkyle en C₁-C₆, ou un groupe alkyle en C₁-C₁₂, aryle en C₆-C₁₂, aralkyle en C₇-C₁₂ ou hétérocycloalkyle en C₃-C₆ avec 1 à 3 hétéroatomes, qui peuvent être substitués par les radicaux précédents ou être reliés en noyaux condensés, et
-W- représente un pont constitué d'une liaison covalente, d'un groupe oxo, d'un groupe soufre, d'un groupe amino, d'un groupe di-alkyle en C₁-C₆-silicium ou d'un radical en C₁-C₁₆ qui peut être un composant d'un ou de plusieurs noyaux cycliques ou aromatiques reliés et être interrompu par 1 à 3 hétéroatomes, la position o- ou m-, respectivement non liée au pont, des noyaux de phosphabenzène pouvant porter un des radicaux R¹ à R⁶,
à l'exception du bis-3,3'(3-méthyl-2,4,6-triphénylphosphabenzène)-1,1'-diphényle,
par réaction de sels de pyrylium correspondants avec PH₃ en présence d'une quantité catalytique d'acide et en présence ou en l'absence d'un solvant ou diluant, **caractérisé en ce que** les sels de pyrylium sont réunis au PH₃ à une température supérieure à 0°C et mis à réagir à une température supérieure à 0°C jusqu'à 200°C et à une pression supérieure à 1 bar.

2. Procédé suivant la revendication 1, **caractérisé en ce que** la réaction s'effectue à une pression partielle de pH₃ de l'ordre de 0,1 à 100 bars.

3. Procédé suivant l'une des revendications 1 et 2, **caractérisé en ce que** la réaction a lieu à une pression de 5 à 35 bars.

4. Procédé suivant l'une des revendications 1 à 3, **caractérisé, en ce que**, pendant la réaction, du PH₃ est introduit dans le mélange réactionnel pour maintenir la pression partielle de PH₃ sensiblement constante.

5. Procédé suivant l'une des revendications 1 à 4, **caractérisé en ce que** les sels de pyrylium sont réunis au PH₃ à la température ambiante et **en ce que** le mélange ainsi obtenu est chauffé pour la réaction à une température de l'ordre de 110 à 130°C.

6. Procédé suivant l'une des revendications 1 à 5, **caractérisé en ce que** les composés des formules générales I et II présentent, comme radicaux R¹ à R⁶, des radicaux phényle ou benzyle qui peuvent être substitués par SO₃M.

7. Procédé suivant l'une des revendications 1 à 6, **caractérisé en ce que** les sels de pyrylium sont des tétrafluoroborates, des perchlorates, des bisulfates, des bromures, des iodures ou leurs mélanges.

8. Procédé suivant l'une des revendications 1 à 7, **caractérisé en ce que**, après la réaction, le mélange réactionnel est détendu et éventuellement balayé par un gaz inerte, les gaz sortant du mélange réactionnel étant, pour la séparation du PH₃ qui n'a pas réagi, refroidis sous une forme liquide et amenés au travers d'un séparateur, et **en ce que** le PH₃ séparé est recyclé dans la réaction.

9. Composés des formules III, IV et V : 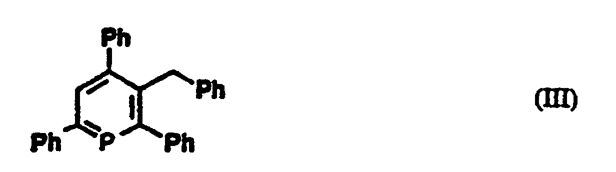 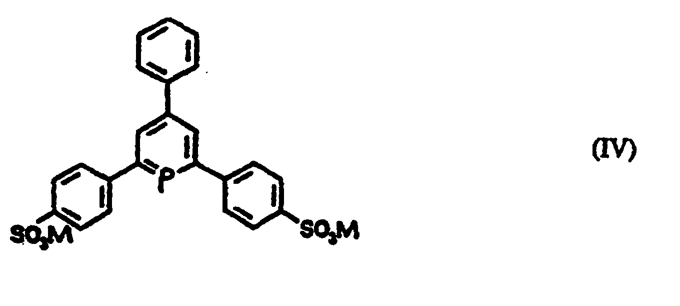 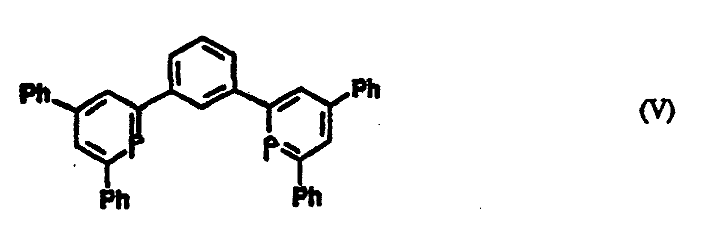 dans lesquelles Ph représente un radical phényle et M représente de l'hydrogène ou un métal alcalin.

10. Utilisation des composés suivant la revendication 9 pour la préparation de complexes avec des métaux du groupe secondaire VIII du Système Périodique des Eléments.
